# EUROPEAN PATENT SPECIFICATION

(11) **EP 3 888 872 B1**
(45) Date of publication and mention of the grant of the patent: **19.07.2023**
(21) Application number: 21163674.1
(22) Date of filing: 19.03.2021
(51) Int. Cl.: B29C 45/17, B29C 45/83

(54) **INJECTION MOLDING MACHINE**
SPRITZGIESSMASCHINE
MACHINE DE MOULAGE À INJECTION

(30) Priority: 31.03.2020 JP 2020065107
(43) Date of publication of application: 06.10.2021
(73) Proprietor: Sumitomo Heavy Industries, Ltd., Tokyo 141-6025 (JP)
(72) Inventor: MOROZUMI, Tomohito, Chiba-shi, Chiba, 263-0001, (JP)
(74) Representative: Louis Pöhlau Lohrentz

(56) References cited:
- DE-A1-102015 011 425
- JP-A- H05 345 339
- JP-A- 2002 307 514
- JP-A- 2003 062 880

## Description

### BACKGROUND OF THE INVENTION

### Field of the Invention

The present invention relates to an injection molding machine.

### Description of Related Art

An injection molding machine includes a mold space adjustment device that adjusts an interval between a plurality of members (for example, an interval between a stationary platen and a toggle support) in accordance with a change in a space of a mold unit, when the mold unit is replaced.

Japanese Unexamined Patent Publication Nos. 2014-54748, H05-345339, 2003-062880, 2002-307514 and German Patent Publication No. 10 2015 011425 disclose an injection molding machine including a rod that connects a plurality of members to each other at an interval, an adjustment nut screwed to a screw portion of the rod to adjust the interval, and a sealing mechanism that prevents a lubricant of the adjustment nut from leaking outward.

### SUMMARY OF THE INVENTION

Incidentally, as disclosed in Japanese Unexamined Patent Publication Nos. 2014-54787, H05-345339, 2003-062880, 2002-307514 and German Patent Publication No. 10 2015 011425, it is preferable to prevent the lubricant from leaking outward.

Therefore, an object of the present invention is to provide an injection molding machine that prevents the lubricant from leaking outward.

According to a first aspect of an embodiment, there is provided an injection molding machine including a rod that connects a first member and a second member to each other at an interval, an adjustment nut that is screwed to a screw portion of the rod to adjust the interval, an adjustment nut accommodation portion provided in the first member, an accommodation portion configured to accommodate a lubricant which has lubricated a portion between an inner peripheral surface of the adjustment nut accommodation portion and an outer peripheral surface of the adjustment nut, and a discharge portion configured to discharge the lubricant accommodated in the accommodation portion, in which the accommodation portion is formed on an inner peripheral surface of the first member.

According to a second aspect of an embodiment, there is provided an injection molding machine including a rod that connects a first member and a second member to each other at an interval, an adjustment nut that is screwed to a screw portion of the rod to adjust the interval, an adjustment nut accommodation portion provided in the first member, a pressing member configured to retain the adjustment nut accommodated in the adjustment nut accommodation portion, an accommodation portion formed on an inner peripheral surface of the pressing member and configured to accommodate a lubricant which has lubricated a portion between the inner peripheral surface of the pressing member and an outer peripheral surface of the adjustment nut, and a discharge portion configured to discharge the lubricant accommodated in the accommodation portion.

According to a third aspect of an embodiment, there is provided an injection molding machine including a rod that connects a first member and a second member to each other at an interval, an adjustment nut that is screwed to a screw portion of the rod to adjust the interval, a driven gear fixed to the adjustment nut, a supply path configured to communicate with the adjustment nut and supply a lubricant to the adjustment nut, and a discharge portion configured to discharge the lubricant which is supplied from the supply path, has lubricated a portion between the rod and the adjustment nut, and has flowed between an inner peripheral surface of the driven gear and the rod.

According to the present invention, it is possible to provide the injection molding machine that prevents the lubricant from leaking outward.

### BRIEF DESCRIPTION OF THE DRAWINGS

FIG. 1 is a view illustrating a state when mold opening is completed in an injection molding machine according to an embodiment.
FIG. 2 is a view illustrating a state when mold clamping is performed in the injection molding machine according to the embodiment.
FIG. 3 is a sectional view of a mold space adjustment mechanism according to a first embodiment.
FIG. 4 is a sectional view of a front side portion of a toggle support through which a tie bar penetrates.
FIG. 5 is a sectional view of a mold space adjustment mechanism according to a second embodiment.
FIG. 6 is a sectional view of a mold space adjustment mechanism according to a third embodiment.
FIG. 7 is a sectional view of a mold space adjustment mechanism according to a fourth embodiment.
FIG. 8 is a sectional view of a front side portion of a toggle support through which a tie bar penetrates in a modification example.

### DETAILED DESCRIPTION OF THE INVENTION

Hereinafter, embodiments according to the present invention will be described with reference to the drawings. In each drawing, the same or corresponding reference numerals will be assigned to the same or corresponding configurations, and description thereof will be omitted.

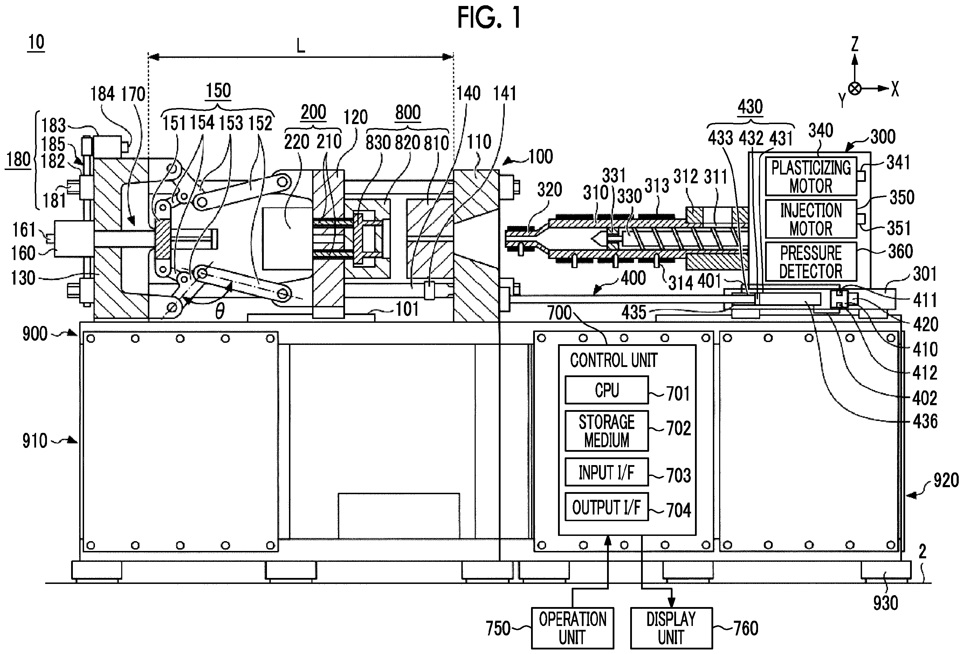

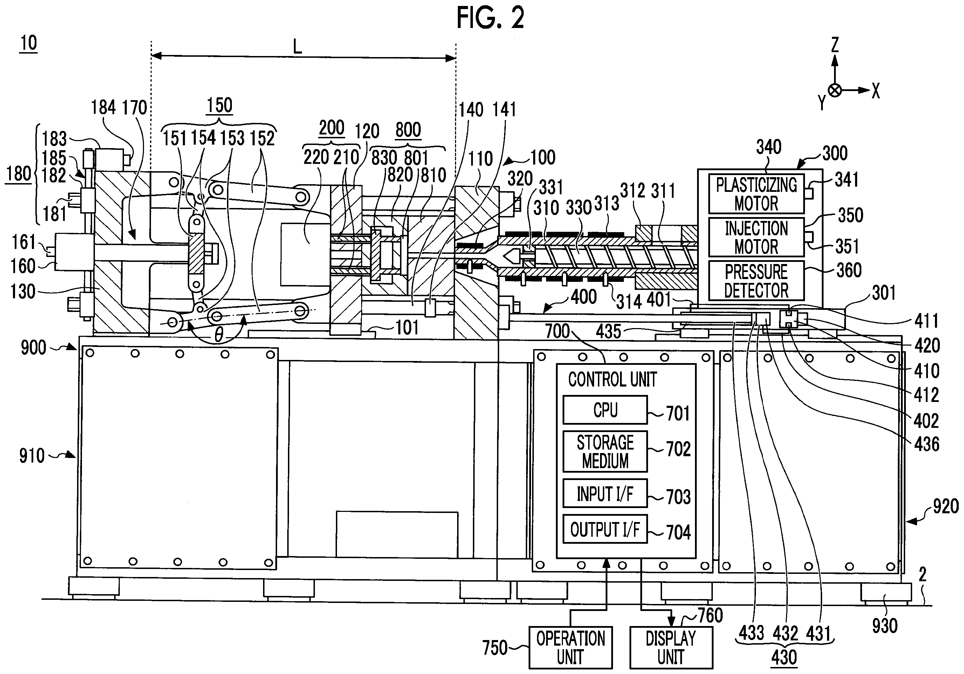

FIG. 1 is a view illustrating a state when mold opening is completed in an injection molding machine according to an embodiment. FIG. 2 is a view illustrating a state when mold clamping is performed in the injection molding machine according to the embodiment. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of the injection molding machine 10. A negative side in the Y-axial direction will be referred to as an operation side, and a positive side in the Y-axial direction will be referred to an anti-operation side.

As illustrated in FIGS. 1-2, an injection molding machine 10 includes a mold clamping unit 100 that opens and closes a mold unit 800, an ejector unit 200 that ejects a molding product molded by the mold unit 800, an injection unit 300 that injects a molding material into the mold unit 800, a moving unit 400 that advances and retreats the injection unit 300 with respect to the mold unit 800, a control unit 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the injection unit 300. The mold clamping unit frame 910 and the injection unit frame 920 are respectively installed on a floor 2 via a leveling adjuster 930. The control unit 700 is disposed in an internal space of the injection unit frame 920. Hereinafter, each component of the injection molding machine 10 will be described.

### Mold Clamping Unit

In describing the mold clamping unit 100, a moving direction of a movable platen 120 during mold closing (for example, a positive direction of an X-axis) will be defined as forward, and a moving direction of the movable platen 120 during mold opening (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary mold 810 and a movable mold 820.

For example, the mold clamping unit 100 is a horizontal type, and a mold opening and closing direction is a horizontal direction. The mold clamping unit 100 has a stationary platen 110 to which a stationary mold 810 is attached, a movable platen 120 to which a movable mold 820 is attached, a toggle support 130 disposed at an interval from the stationary platen 110, a tie bar 140 that connects the stationary platen 110 and the toggle support 130 to each other, a toggle mechanism 150 that moves the movable platen 120 with respect to the toggle support 130 in a mold opening and closing direction, a mold clamping motor 160 that operates the toggle mechanism 150, a motion conversion mechanism 170 that converts a rotational motion into a linear motion of the mold clamping motor 160, and a mold space adjustment mechanism 180 that adjusts an interval between the stationary platen 110 and the toggle support 130.

The stationary platen 110 is fixed to the mold clamping unit frame 910. The stationary mold 810 is attached to a facing surface of the stationary platen 110 which faces the movable platen 120.

The movable platen 120 is disposed to be movable with respect to the mold clamping unit frame 910 in the mold opening and closing direction. A guide 101 that guides the movable platen 120 is laid on the mold clamping unit frame 910. The movable mold 820 is attached to a facing surface of the movable platen 120 which faces the stationary platen 110. Since the movable platen 120 is advanced and retreated with respect to the stationary platen 110, the mold unit 800 performs mold closing, pressurizing, mold clamping, depressurizing, and mold opening are performed.

The toggle support 130 is disposed at an interval from the stationary platen 110, and is mounted on the mold clamping unit frame 910 to be movable in the mold opening and closing direction. The toggle support 130 may be disposed to be movable along a guide laid on the mold clamping unit frame 910. The guide of the toggle support 130 may be the same as the guide 101 of the movable platen 120.

In the present embodiment, the stationary platen 110 is fixed to the mold clamping unit frame 910, and the toggle support 130 is disposed to be movable with respect to the mold clamping unit frame 910 in the mold opening and closing direction. However, the toggle support 130 may be fixed to the mold clamping unit frame 910, and the stationary platen 110 may be disposed to be movable with respect to the mold clamping unit frame 910 in the mold opening and closing direction.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control unit 700. The detection result of the tie bar strain detector 141 is used in detecting the mold clamping force.

In the present embodiment, as a mold clamping force detector for measuring the mold clamping force, the tie bar strain detector 141 is used. However, the present invention is not limited thereto. The mold clamping force detector is not limited to a strain gauge type, and may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 with respect to the toggle support 130 in the mold opening and closing direction. The toggle mechanism 150 has a crosshead 151 that moves in the mold opening and closing direction, and a pair of link groups bent and stretched by a movement of the crosshead 151. Each of the pair of link groups has a first link 152 and a second link 153 which are connected to be freely bent and stretched by a pin. The first link 152 is attached to the movable platen 120 to freely oscillate by a pin. The second link 153 is attached to the toggle support 130 to freely oscillate by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to configurations illustrated in FIGS. 1 and 2. For example, in FIGS. 1 and 2, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotational motion of the mold clamping motor 160 into a linear motion of the crosshead 151. The motion conversion mechanism 170 includes a screw shaft and a screw nut screwed to the screw shaft. A ball or roller may be interposed between the screw shaft and the screw nut.

The mold clamping unit 100 performs a mold closing process, a pressurizing process, a mold clamping process, a depressurizing process, and a mold opening process under the control of the control unit 700.

In the mold closing process, the mold clamping motor 160 is driven to advance the movable platen 120 by advancing the crosshead 151 to a mold closing completion position at a set movement speed. In this manner, the movable mold 820 is caused to touch the stationary mold 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control unit 700.

A crosshead position detector for detecting a position of the crosshead 151 and a crosshead movement speed detector for measuring a movement speed of the crosshead 151 are not limited to the mold clamping motor encoder 161, and a general detector can be used. In addition, a movable platen position detector for detecting a position of the movable platen 120 and a movable platen movement speed detector for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at a mold clamping position. In the mold clamping process, the mold clamping force generated in the pressurizing process is maintained. In the mold clamping process, a cavity space 801 (refer to FIG. 2) is formed between the movable mold 820 and the stationary mold 810, and the injection unit 300 fills the cavity space 801 with a liquid molding material. A molding product is obtained by solidifying the molding material filled therein.

The number of the cavity spaces 801 may be one or more. In the latter case, a plurality of molding products can be obtained at the same time. An insert material may be disposed in a portion of the cavity space 801, and the other portion of the cavity space 801 may be filled with the molding material. A molding product in which the insert material and the molding material are integrated with each other can be obtained.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position the movable platen 120 at a set movement speed. In this manner, the movable platen 120 is retreated so that the movable mold 820 is separated from the stationary mold 810. Thereafter, the ejector unit 200 ejects the molding product from the movable mold 820.

Setting conditions in the mold closing process, the pressurizing process, and the mold clamping process are collectively set as a series of setting conditions. For example, the movement speed or positions of the crosshead 151 (including a mold closing start position, a movement speed switching position, a mold closing completion position, and a mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner . For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the positions of the movable platen 120 may be set. In addition, instead of the position (for example, the mold clamping position) or the position of the movable platen of the crosshead, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed by the first link 152 and the second link 153. The link angle θ is obtained from the position of the crosshead 151. When the link angle θ is 180°, the toggle magnification is maximized.

When a thickness of the mold unit 800 is changed due to replacement or mold unit 800 or a temperature change in the mold unit 800, a mold space is adjusted so that a predetermined mold clamping force is obtained during the mold clamping. For example, in the mold space adjustment, an interval L between the stationary platen 110 and the toggle support 130 is adjusted so that the link angle θ of the toggle mechanism 150 becomes a predetermined angle when the movable mold 820 touches the stationary mold 810.

The mold clamping unit 100 has a mold space adjustment mechanism 180. The mold space adjustment mechanism 180 adjusts a mold space by adjusting the interval L between the stationary platen 110 and the toggle support 130. For example, a timing for adjusting the mold space is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each tie bar 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission path of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of the driven gears and an intermediate gear meshing with the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control unit 700. The control unit 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination.

The interval L is detected by using a mold space adjustment motor encoder 184. The mold space adjustment motor encoder 184 detects a rotation amount or a rotation direction of the mold space adjustment motor 183, and transmits a signal indicating a detection result thereof to the control unit 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 of the present embodiment is a horizontal type in which the mold opening and closing direction is a horizontal direction, but may be a vertical type in which the mold opening and closing direction is a vertical direction.

The mold clamping unit 100 of the present embodiment has the mold clamping motor 160 as a drive source. However, a hydraulic cylinder may be provided instead of the mold clamping motor 160. In addition, the mold clamping unit 100 may have a linear motor for mold opening and closing, and may have an electromagnet for mold clamping.

### Ejector Unit

In describing the ejector unit 200, similarly to the description of the mold clamping unit 100, a moving direction of the movable platen 120 during the mold closing (for example, the positive direction of the X-axis) will be defined as forward, and a moving direction of the movable platen 120 during the mold opening (for example, the negative direction of the X-axis) will be defined as rearward.

The ejector unit 200 is attached to the movable platen 120, and is advanced and retreated together with the movable platen 120. The ejector unit 200 has an ejector rod 210 that ejects a molding product from the mold unit 800, and a drive mechanism 220 that moves the ejector rod 210 in the moving direction (X-axial direction) of the movable platen 120.

The ejector rod 210 is disposed to be freely advanced and retreated in a through-hole of the movable platen 120. A front end portion of the ejector rod 210 comes into contact with a movable member 830 disposed to be freely advanced and retreated inside the movable mold 820. The front end portion of the ejector rod 210 may be connected to or may not be connected to the movable member 830.

For example, the drive mechanism 220 has an ejector motor and a motion conversion mechanism that converts a rotational motion of the ejector motor into a linear motion of the ejector rod 210. The motion conversion mechanism includes a screw shaft and a screw nut screwed to the screw shaft. A ball or roller may be interposed between the screw shaft and the screw nut.

The ejector unit 200 performs an ejection process under the control of the control unit 700. In the ejection process, the ejector rod 210 is advanced from a standby position to an ejection position at a set movement speed. In this manner, the movable member 830 is advanced to eject the molding product. Thereafter, the ejector motor is driven to retreat the ejector rod 210 at a set movement speed, and the movable member 830 is retreated to an original standby position.

For example, a position or a movement speed of the ejector rod 210 is detected by using an ejector motor encoder. The ejector motor encoder detects the rotation of the ejector motor, and transmits a signal indicating a detection result thereof to the control unit 700. An ejector rod position detector for detecting the position of the ejector rod 210, and an ejector rod movement speed detector for measuring the movement speed of the ejector rod 210 are not limited to the ejector motor encoder, and a general detector can be used.

### Injection Unit

In describing the injection unit 300, unlike the description of the mold clamping unit 100 or the description of the ejector unit 200, a moving direction of the screw 330 during filling (for example, the negative direction of the X-axis) will be defined as forward, and a moving direction of the screw 330 during plasticizing (for example, the positive direction of the X-axis) will be defined as rearward.

The injection unit 300 is disposed in a slide base 301, and the slide base 301 is disposed to be advanced and retreated with respect to the injection unit frame 920. The injection unit 300 is disposed as to be freely advanced and retreated with respect to the mold unit 800. The injection unit 300 touches the mold unit 800, and fills a molding material into the cavity space 801 inside the mold unit 800. For example, the injection unit 300 has a cylinder 310 that heats the molding material, a nozzle 320 provided in a front end portion of the cylinder 310, a screw 330 disposed to be freely advanced and retreated and rotatable inside the cylinder 310, a plasticizing motor 340 that rotates the screw 330, an injection motor 350 that advances and retreats the screw 330, and a pressure detector 360 that measures a force transmitted between the injection motor 350 and the screw 330.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The cylinder 310 is divided into a plurality of zones in the axial direction (for example, the X-axial direction) of the cylinder 310. The heating unit 313 and the temperature measurer 314 are provided in each of the plurality of zones. The control unit 700 controls the heating unit 313 so that a set temperature is set in each of the plurality of zones and a measured temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control unit 700 controls the heating unit 313 so that the measured temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is ejected from the nozzle 320, and fills the inside of the mold unit 800.

As a backflow prevention valve to prevent a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the molding material accumulated in the front of the screw 330 is prevented from flowing rearward.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The injection unit 300 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotational motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The pressure detector 360 detects a force transmitted between the injection motor 350 and the screw 330. The detected force is converted into the pressure by the control unit 700. The pressure detector 360 is provided in a force transmission path between the injection motor 350 and the screw 330, and detects the force acting on the pressure detector 360.

The pressure detector 360 transmits a signal indicating a detection result thereof to the control unit 700. The detection result of the pressure detector 360 is used in controlling or monitoring the pressure received by the screw 330 from the molding material, a back pressure acting on the screw 330, or the pressure acting on the molding material from the screw 330.

The injection unit 300 performs a plasticizing process, a filling process, and a holding pressure process under the control of the control unit 700. The filling process and the holding pressure process may be collectively referred to as an injection process.

In the plasticizing process, the plasticizing motor 340 is driven to rotate the screw 330 at a set rotation speed, and the molding material is fed forward along the helical groove of the screw 330. Through the process, the molding material is gradually melted. As the liquid molding material is fed forward of the screw 330 and is accumulated in a front portion of the cylinder 310, the screw 330 is retreated. For example, a rotation speed of the screw 330 is measured by using a plasticizing motor encoder 341. The plasticizing motor encoder 341 detects the rotation of the plasticizing motor 340, and transmits a signal indicating a detection result thereof to the control unit 700. A screw rotation speed detector for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the pressure detector 360, for example. The pressure detector 360 transmits a signal indicating a detection result thereof to the control unit 700. When the screw 330 is retreated to a plasticizing completion position and a predetermined amount of the molding material is accumulated in front of the screw 330, the plasticizing process is completed.

The position and the rotation speed of the screw 330 in the plasticizing process are collectively set as a series of setting conditions. For example, the plasticizing start position, the rotating speed switching position, and the plasticizing completion position are set. The positions are aligned in this order from the front side toward the rear side, and represent the start point and the end point of the section in which the rotation speed is set. The rotation speed is set for each section. The number of the rotating speed switching positions may be one or more. The rotating speed switching position may not be set. In addition, the back pressure is set for each section.

In the filling process, the injection motor 350 is driven to advance the screw 330 at a set movement speed, and the liquid molding material accumulated in front of the screw 330 fills the cavity space 801 inside the mold unit 800. The position or the movement speed of the screw 330 is detected by using an injection motor encoder 351, for example. The injection motor encoder 351 detects the rotation of the injection motor 350, and transmits a signal indicating a detection result thereof to the control unit 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, the filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the pressure detector 360. When a measurement value of the pressure detector 360 is equal to or smaller than a setting pressure, the screw 330 is advanced at a set movement speed. On the other hand, when the measurement value of the pressure detector 360 exceeds the setting pressure, in order to protect the mold, the screw 330 is advanced at the movement speed slower than the set movement speed so that the measurement value of the pressure detector 360 is equal to or smaller than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is maintained at a set pressure, and the molding material remaining inside the cylinder 310 is pressed toward the mold unit 800. The molding material which is insufficient due to cooling shrinkage inside the mold unit 800 can be replenished. The holding pressure is measured by using the pressure detector 360, for example. The pressure detector 360 transmits a signal indicating a detection result thereof to the control unit 700. A set value of the holding pressure may be changed depending on an elapsed time from the start of the holding pressure process . The holding pressure and a holding time for holding the holding pressure in the holding pressure process may be respectively set, or may be collectively set as a series of setting conditions.

In the holding pressure process, the molding material in the cavity space 801 inside the mold unit 800 is gradually cooled, and when the holding pressure process is completed, an entrance of the cavity space 801 is closed by the solidified molding material. This state is referred to as gate seal, and prevents the backflow of the molding material from the cavity space 801. After the holding pressure process, a cooling process starts. In the cooling process, the molding material inside the cavity space 801 is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the injection unit 300 of the present embodiment is a horizontal type in which the axial direction of the cylinder 310 is a horizontal direction, but may be a vertical type in which the axial direction of the cylinder 310 is a vertical direction. The mold clamping unit combined with the injection unit 300 of the vertical type may be the vertical type or the horizontal type. Similarly, the mold clamping unit combined with the injection unit 300 of the horizontal type may be the horizontal type or the vertical type.

### Moving Unit

In describing the moving unit 400, similarly to the description of the injection unit 300, a moving direction of the screw 330 during the filling (for example, the negative direction of the X-axis) will be defined as forward, and a moving direction of the screw 330 during the plasticizing (for example, the positive direction of the X-axis) will be defined as rearward.

The moving unit 400 advances and retreats the injection unit 300 with respect to the mold unit 800. The moving unit 400 presses the nozzle 320 against the mold unit 800, thereby generating a nozzle touch pressure. The moving unit 400 includes a hydraulic pump 410, a motor 420 serving as a drive source, and a hydraulic cylinder 430 serving as a hydraulic actuator.

The hydraulic pump 410 has a first port 411 and a second port 412. The hydraulic pump 410 is a pump that can rotate in both directions, and switches the rotation direction of the motor 420. In this manner, a hydraulic fluid (for example, oil) is sucked from any one of the first port 411 and the second port 412, and is discharged from the other to generate a hydraulic pressure. The hydraulic pump 410 can suck the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control unit 700. The motor 420 may be an electric motor, or may be an electric servo motor.

The hydraulic cylinder 430 has a cylinder body 431, a piston 432, and a piston rod 433. The cylinder body 431 is fixed to the injection unit 300. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401. In this manner, the injection unit 300 is pressed forward. The injection unit 300 is advanced, and the nozzle 320 is pressed against the stationary mold 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402. In this manner, the injection unit 300 is pressed rearward. The injection unit 300 is retreated, and the nozzle 320 is separated from the stationary mold 810.

In the present embodiment, the moving unit 400 includes the hydraulic cylinder 430, but the present invention is not limited thereto. For example, instead of the hydraulic cylinder 430, an electric motor and a motion conversion mechanism that converts a rotational motion of the electric motor into a linear motion of the injection unit 300 may be used.

### Control Unit

For example, the control unit 700 is configured to include a computer, and has a central processing unit (CPU) 701, a storage medium 702 such as a memory, an input interface 703, and an output interface 704 as illustrated in FIGS. 1 and 2. The control unit 700 performs various controls by causing the CPU 701 to execute a program stored in the storage medium 702. In addition, the control unit 700 receives a signal from the outside through the input interface 703, and transmits the signal to the outside through the output interface 704.

The control unit 700 repeatedly performs the plasticizing process, the mold closing process, the pressurizing process, the mold clamping process, the filling process, the holding pressure process, the cooling process, the depressurizing process, the mold opening process, and the ejection process, thereby repeatedly manufacturing the molding product. A series of operations for obtaining the molding product, for example, an operation from the start of a plasticizing process to the start of the subsequent plasticizing process will be referred to as a "shot" or a "molding cycle" . In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, and the ejection process are performed in this order. The order described here is the order of the start times of the respective processes. The filling process, the holding pressure process, and the cooling process are performed during the mold clamping process. The start of the mold clamping process may coincide with the start of the filling process. The completion of the depressurizing process coincides with the start of the mold opening process.

A plurality of processes may be simultaneously performed in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. Even when the mold opening process starts during the plasticizing process, when the on-off valve closes the flow path of the nozzle 320, the molding material from does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, and the ejection process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and can prevent leakage of molding material from the nozzle 320 before the filling process starts.

The control unit 700 is connected to an operation unit 750 that receives an input operation of a user, and a display unit 760 that displays a display screen. For example, the operation unit 750 and the display unit 760 may be configured to include a touch panel, and may be integrated with each other. The touch panel serving as the display unit 760 displays the display screen under the control of the control unit 700. For example, the display screen of the touch panel may display settings of the injection molding machine 10, and information on a current state of the injection molding machine 10. In addition, for example, the display screen of the touch panel may display a button for receiving the input operation of the user or an input operation unit such as an input field. The touch panel serving as the operation unit 750 detects an input operation of the user on the display screen, and outputs a signal corresponding to the input operation to the control unit 700. In this manner, for example, while confirming information displayed on the display screen, the user can perform settings (including an input of a set value) of the injection molding machine 10 by operating the input operation unit provided on the display screen. In addition, the user can operate the injection molding machine 10 corresponding to the input operation unit by operating the input operation unit provided on the display screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the display screens displayed on the touch panel serving as the display unit 760.

A case has been described in which the operation unit 750 and the display unit 760 of the present embodiment are integrated with each other as the touch panel. However, both of these may be independently provided. In addition, a plurality of the operation units 750 may be provided. The operation unit 750 and the display unit 760 are disposed on the operation side (negative direction of the Y-axis) of the mold clamping unit 100 (more specifically, the stationary platen 110).

### Mold Space Adjustment Mechanism

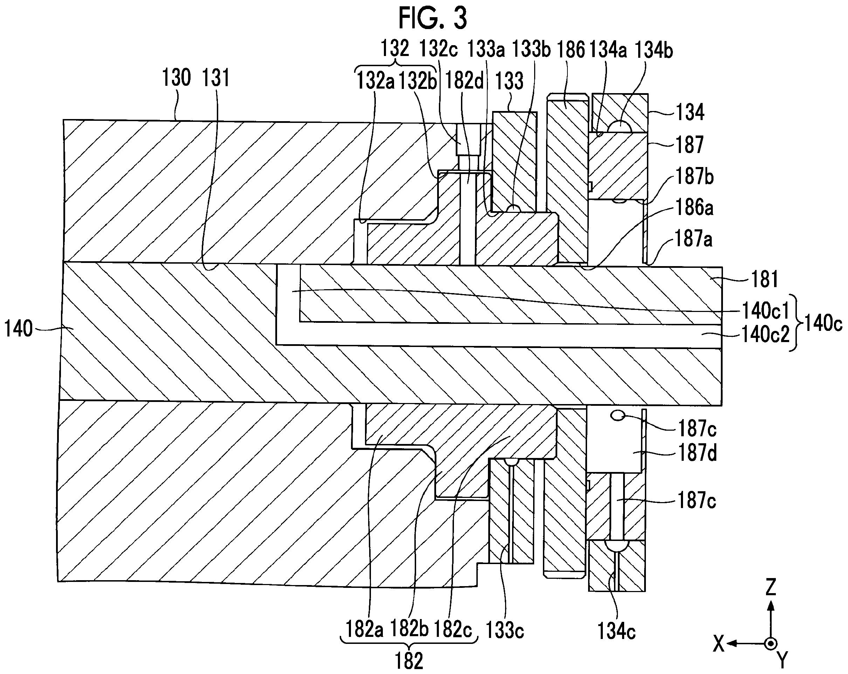

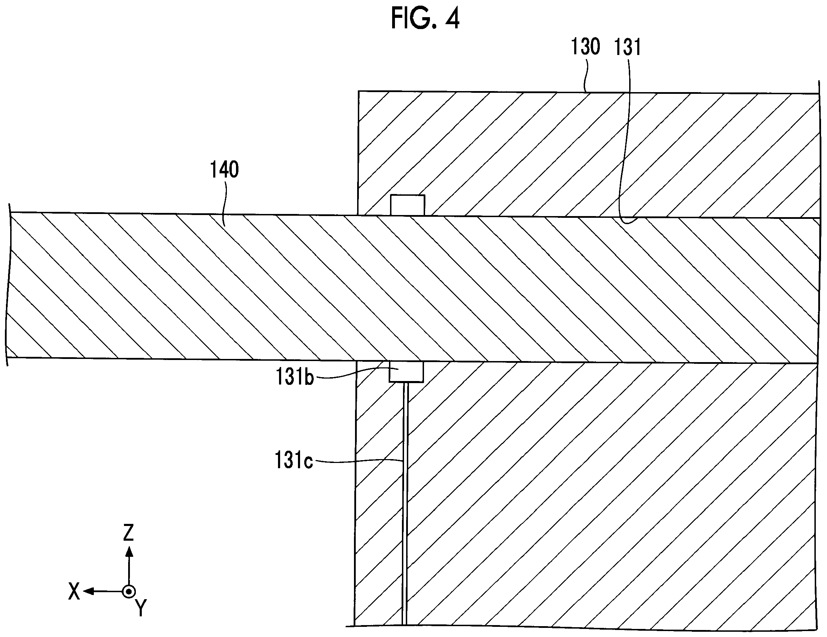

Next, a lubrication structure of the mold space adjustment mechanism 180 of the first embodiment will be described with reference to FIGS. 3 and 4. FIG. 3 is a sectional view of the mold space adjustment mechanism 180 of the first embodiment.

The toggle support (first member) 130 and the stationary platen (second member) 110 are connected to each other by the tie bar (rod) 140. A through-hole 131 through which the tie bar 140 penetrates is formed in the toggle support 130, and a screw nut accommodation portion (adjustment nut accommodation portion) 132 having an enlarged diameter is formed on a rear end side of the through-hole 131. The screw nut accommodation portion 132 has a first accommodation portion 132a having a diameter larger than that of the through-hole 131, and a second accommodation portion 132b having a diameter larger than that of the first accommodation portion 132a. In addition, a supply path 132c through which the outside of the toggle support 130 communicates with the screw nut accommodation portion 132 is formed in the toggle support 130. In FIG. 3, the supply path 132c communicates with the second accommodation portion 132b.

A screw shaft (screw portion) 181 is formed in a rear end portion of the tie bar 140.

The screw nut (adjustment nut) 182 has a first cylinder portion 182a, a second cylinder portion 182b having an outer diameter larger than that of the first cylinder portion 182a, and a third cylinder portion 182c having an outer diameter smaller than that of the second cylinder portion 182b. The first cylinder portion 182a, the second cylinder portion 182b, and the third cylinder portion 182c are coaxially formed. Inner diameters of the first cylinder portion 182a, the second cylinder portion 182b, and the third cylinder portion 182c are continuous, and a female screw to be screwed to the screw shaft 181 is formed. In addition, a supply path 182d that penetrates from the outer periphery to the inner periphery is formed in the screw nut 182. In FIG. 3, the supply path 182d penetrates the second cylinder portion 182b.

When the screw nut 182 is accommodated in the screw nut accommodation portion 132, the first cylinder portion 182a is accommodated in the first accommodation portion 132a, and the second cylinder portion 182b is accommodated in the second accommodation portion 132b.

A pressing member 133 is formed in a plate shape whose central portion is open, and is fixed to the toggle support 130. The pressing member 133 retains the screw nut 182 from the toggle support 130 by pinching the second cylinder portion 182b of the screw nut 182 between the pressing member 133 and the toggle support 130. The pressing member 133 and the toggle support 130 which are fixed are sealed with a gasket (not illustrated).

The pressing member 133 has a through-hole 133a through which the third cylinder portion 182c of the screw nut 182 penetrates. A cylindrical groove (accommodation portion) 133b is formed on an inner peripheral surface of the through-hole 133a. In addition, a discharge path (discharge portion) 133c extending outward of the pressing member 133 from the cylindrical groove 133b is formed. In FIG. 3, the discharge path 133c extends outward in a radial direction from the cylindrical groove 133b. In addition, the discharge path 133c extends downward from the cylindrical groove 133b.

A rear end of the third cylinder portion 182c of the screw nut 182 protrudes outward of the pressing member 133, and is fixed to a driven gear 186. The driven gear 186 has a through-hole 186a through which the screw shaft 181 penetrates. The driven gear 186 configures a portion of the rotational driving force transmitting unit 185, and is a rotating member rotated by the mold space adjustment motor 183. That is, the driven gear 186 is rotated by the mold space adjustment motor 183, thereby rotating the screw nut 182. The screw nut 182 and the driven gear 186 which are fixed are sealed with a gasket (not illustrated).

A rotating cover 187 is provided on a rear surface side of the driven gear 186. The rotating cover 187 is formed in a plate shape whose central portion is open, and is formed so that an opening on the front surface side has a diameter larger than that of an opening on the rear surface side. In other words, the rotating cover 187 has a through-hole 187a through which the screw shaft 181 penetrates. An enlarged diameter portion 187b having a diameter larger than that of the through-hole 187a is formed on the inner peripheral surface of the through-hole 187a. The enlarged diameter portion 187b is formed from the front surface of the rotating cover 187. In addition, a plurality of discharge paths (discharge portion, first discharge portion) 187c extending outward in the radial direction of the rotating cover 187 from the peripheral surface of the enlarged diameter portion 187b are formed. In the rotating cover 187, the screw shaft 181 penetrates the through-hole 187a, the front surface side of the rotating cover 187 is in contact with the rear surface side of the driven gear 186, and the rotating cover 187 is fixed to the driven gear 186 by a bolt (not illustrated) . The driven gear 186 and the rotating cover 187 which are fixed are sealed with a gasket (not illustrated). In this manner, the rotating cover 187 has an internal space 187d (accommodation portion ) partitioned (formed) by a rear side surface of the driven gear 186, a peripheral surface and a front side surface of the enlarged diameter portion 187b, and an outer peripheral surface of the screw shaft 181.

An annular stationary cover 134 is provided outside in the radial direction of the rotating cover 187. The stationary cover 134 is fixed to the toggle support 130 via a fixing member (not illustrated). The stationary cover 134 has a through-hole 134a through which the rotating cover 187 penetrates. The through-hole 134a is disposed coaxially with the rotating cover 187. The inner diameter of the through-hole 134a is formed to be slightly larger than the outer diameter of the rotating cover 187. In this manner, the rotating cover 187 disposed inside the through-hole 134a of the stationary cover 134 can rotate. A slight gap may be provided between the inner peripheral surface of the stationary cover 134 and the outer peripheral surface of the rotating cover 187. In addition, the inner peripheral surface of the stationary cover 134 and the outer peripheral surface of the rotating cover 187 may be a sliding surface that slides when the rotating cover 187 rotates. A cylindrical groove (discharge portion, second discharge portion) 134b is formed on the inner peripheral surface of the through-hole 134a. Here, the cylindrical groove 134b is formed at a position communicating with the discharge path 187c of the rotating cover 187. In addition, a discharge path (discharge portion, second discharge portion) 134c extending outward of the stationary cover 134 from the cylindrical groove 134b is formed. In FIG. 3, the discharge path 134c extends outward in the radial direction from the cylindrical groove 134b. In addition, the discharge path 134c extends downward from the cylindrical groove 134b.

Next, lubrication of the mold space adjustment mechanism 180 will be described.

A lubricant supplied from the supply path 132c provided on the upper surface of the toggle support 130 lubricates a portion between the screw nut accommodation portion 132 and the outer peripheral surface of the screw nut 182. The lubricant lubricating a portion between the inner peripheral surface of the pressing member 133 and the outer peripheral surface of the screw nut 182 (third cylinder portion 182c) flows to the cylindrical groove (accommodation portion) 133b formed on the inner peripheral surface of the pressing member 133, and is discharged from the discharge path (discharge portion) 133c.

According to this configuration, it is possible to prevent the lubricant from leaking outward from a gap between the through-hole 133a of the pressing member 133 and the screw nut 182 (third cylinder portion 182c) .

In addition, the lubricant supplied from the supply path 132c flows through the supply path 182d, lubricates a portion between the screw shaft 181 and the screw nut 182. The lubricant lubricating the portion between the screw shaft 181 and the screw nut 182 flows between the inner peripheral surface of the driven gear 186 and the screw shaft 181, and flows into the internal space (accommodation portion) 187d of the rotating cover 187. The lubricant flowing into the internal space 187d flows to a discharge path (discharge portion, first discharge portion) 187c of the rotating cover 187 and a cylindrical groove (discharge portion, second discharge portion) 134b of the stationary cover 134, and is discharged from a discharge path (discharge portion, second discharge portion) 134c of the stationary cover 134.

According to this configuration, the lubricant flowing out from a gap between the through-hole 186a of the driven gear 186 and the screw shaft 181 is recovered by the rotating cover 187 and the stationary cover 134. Accordingly, it is possible to prevent the lubricant from leaking outward.

The discharge path 133c may be drawn in a discharge direction. In this manner, the cylindrical groove 133b internally has a negative pressure, thereby generating air flowing from the rear surface side of the pressing member 133 toward the cylindrical groove 133b through the gap between the inner peripheral surface of the pressing member 133 and the outer peripheral surface of the screw nut 182 (third cylinder portion 182c). Accordingly, it is possible to prevent the lubricant from leaking outward from the gap.

In addition, the discharge path 134c may be drawn in the discharge direction. In this manner, the cylindrical groove 134b internally has a negative pressure, thereby generating air flowing toward the cylindrical groove 134b through the gap between the inner peripheral surface of the stationary cover 134 and the outer peripheral surface of the rotating cover 187. Accordingly, it is possible to prevent the lubricant from leaking outward from the gap. In addition, the internal space 187d of the rotating cover 187 internally has a negative pressure, thereby generating air flowing from the rear surface side of the rotating cover 187 toward the internal space 187d through the gap between the inner peripheral surface of the rotating cover 187 and the outer peripheral surface of the screw shaft 181. Accordingly, it is possible to prevent the lubricant from leaking outward from the gap.

FIG. 4 is a sectional view of a front side portion of the toggle support 130 through which the tie bar 140 penetrates.

A cylindrical groove (accommodation portion) 131b is formed on the inner peripheral surface of the through-hole 131 through which the tie bar 140 penetrates. In addition, a discharge path (discharge portion) 131c extending outward of the toggle support 130 from the cylindrical groove 131b is formed. In FIG. 4, the discharge path 131c extends downward from the cylindrical groove 131b.

The lubricant supplied from the supply path 132c (refer to FIG. 3) also flows forward of the through-hole 131. Here, the lubricant flowing forward of the through-hole 131 flows to the cylindrical groove (accommodation portion) 131b formed on the inner peripheral surface of the through-hole 131, and is discharged from the discharge path (discharge portion) 131c.

According to this configuration, it is possible to prevent the lubricant from leaking outward from the gap between the through-hole 131 on the front side of the toggle support 130 and the tie bar 140.

The discharge path 131c may be drawn in the discharge direction. In this manner, the cylindrical groove 131b internally has a negative pressure, thereby generating air flowing from the front surface side of the toggle support 130 toward the cylindrical groove 131b through the gap between the inner peripheral surface of the toggle support 130 and the outer peripheral surface of the tie bar 140. Accordingly, it is possible to prevent the lubricant from leaking outward from the gap.

As described above, according to the injection molding machine 10 of the present embodiment, the lubricant supplied from the supply path 132c to the screw shaft 181 and the screw nut 182 can be discharged from the discharge paths 133c, 134c, and 131c. Accordingly, it is possible to prevent the lubricant from leaking outward.

The discharge path is not limited thereto, and as illustrated in FIG. 3, the discharge path (discharge portion) 140c may be provided in the tie bar 140. The discharge path 140c has a first flow path 140c1 formed in the radial direction from a side surface of the tie bar 140 (screw shaft 181) to the center of the tie bar 140 (screw shaft 181), and a second flow path 140c2 communicating with the first flow path 140c1 and formed in the axial direction to the rear end of the tie bar 140 (screw shaft 181). In this manner, the lubricant is discharged from the gap between the through-hole 131 of the toggle support 130 and tie bar 140. Accordingly, it is possible to prevent the lubricant from leaking outward from the gap between the through-hole 131 on the front side of the toggle support 130 and tie bar 140. In addition, a cylindrical groove (accommodation portion) (not illustrated) may be provided on the outer peripheral surface of the tie bar 140. In addition, the discharge path 140c may be drawn in the discharge direction.

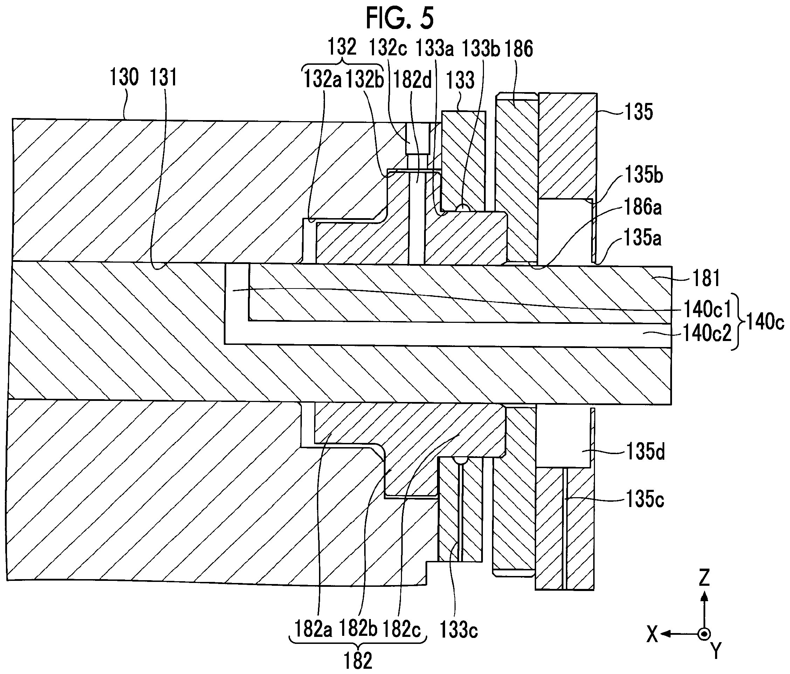

Next, a lubrication structure of the mold space adjustment mechanism 180 of a second embodiment will be described with reference to FIG. 5. FIG. 5 is a sectional view of the mold space adjustment mechanism 180 of the second embodiment.

In the lubrication structure of the mold space adjustment mechanism 180 of the second embodiment, compared to the lubrication structure of the mold space adjustment mechanism 180 of the first embodiment illustrated in FIG. 3, a stationary cover 135 is provided instead of the rotating cover 187 and the stationary cover 134.

The stationary cover 135 is provided on the rear surface side of the driven gear 186. The stationary cover 135 is formed in a plate shape whose central portion is open, and is formed so that an opening on the front surface side has a diameter larger than that of an opening on the rear surface side. In other words, the stationary cover 135 has a through-hole 135a through which the screw shaft 181 penetrates. An enlarged diameter portion 135b having a diameter larger than that of the through-hole 135a is formed on the inner peripheral surface of the through-hole 135a. The enlarged diameter portion 135b is formed from the front surface of the stationary cover 135. In addition, a discharge path (discharge portion) 135c extending outward of the stationary cover 135 from the peripheral surface of the enlarged diameter portion 135b is formed. In FIG. 5, the discharge path 135c extends outward in the radial direction from the enlarged diameter portion 135b. In addition, the discharge path 135c extends downward from the enlarged diameter portion 135b. The stationary cover 135 is disposed so that the screw shaft 181 penetrates the through-hole 135a and the front surface side of the stationary cover 135 faces the rear surface side of the driven gear 186. In addition, the stationary cover 135 is fixed to the toggle support 130 via a fixing member (not illustrated) . The rear surface side of the driven gear 186 and the front surface side of the stationary cover 135 may be a sliding surface that slides when the driven gear 186 rotates. In this manner, the stationary cover 135 has an internal space (accommodation portion ) 135d partitioned (formed) by the rear side surface of the driven gear 186, the peripheral surface and the front side surface of the enlarged diameter portion 135b, and the outer peripheral surface of the screw shaft 181.

According to this configuration, the lubricant flowing out from the gap between the through-hole 186a of the driven gear 186 and the screw shaft 181 is recovered by the stationary cover 135. Accordingly, it is possible to prevent the lubricant from leaking outward.

In addition, the discharge path 135c may be drawn in the discharge direction. In this manner, the internal space 135d internally has a negative pressure, thereby generating the air flowing from the rear surface side of the stationary cover 135 toward the internal space 135d through the gap between the inner peripheral surface of the stationary cover 135 and the outer peripheral surface of the screw shaft 181, and additionally generating the air flowing toward the internal space 135d through the gap between the rear surface side of the driven gear 186 and the front surface side of the stationary cover 135. Accordingly, it is possible to prevent the lubricant from leaking outward from the gap.

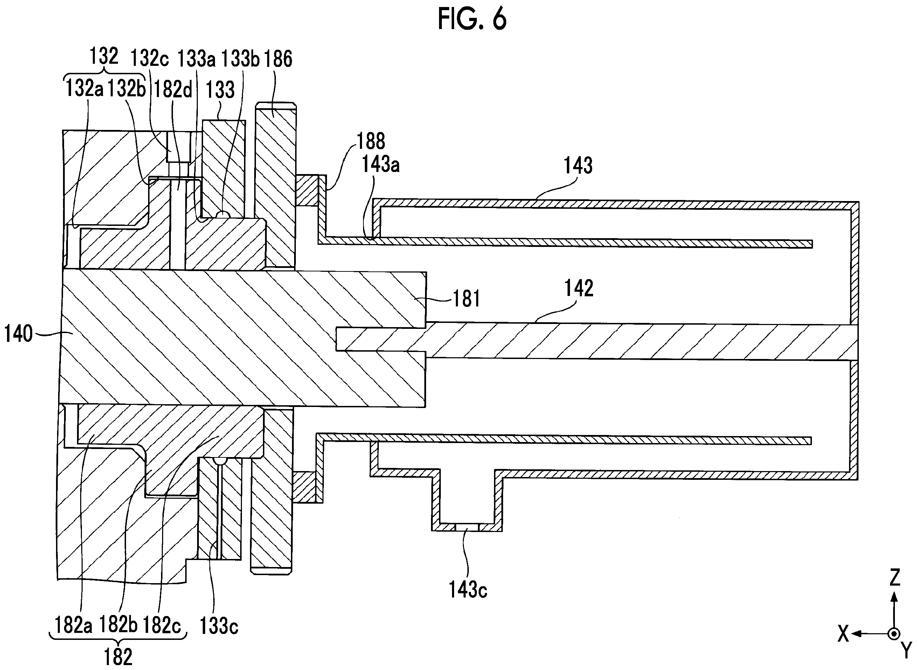

Next, a lubrication structure of the mold space adjustment mechanism 180 of a third embodiment will be described with reference to FIG. 6. FIG. 6 is a sectional view of the mold space adjustment mechanism 180 of the third embodiment.

In the lubrication structure of the mold space adjustment mechanism 180 of the third embodiment, compared to the lubrication structure of the mold space adjustment mechanism 180 of the first embodiment illustrated in FIG. 3, an extension shaft 142, a stationary outer cylinder 143, and a rotating inner cylinder 188 are provided instead of the rotating cover 187 and the stationary cover 134.

The stationary outer cylinder (accommodation portion) 143 has an opening portion 143a on a front end side, and a rear end side is closed. In addition, the stationary outer cylinder 143 is provided with a discharge path (discharge portion) 143c. The extension shaft 142 is fixed in the axial direction from an end of the tie bar 140 (screw shaft 181). The stationary outer cylinder 143 is fixed to the extension shaft 142.

The rotating inner cylinder 188 is fixed to the driven gear 186 on the front end side. That is, the rotating inner cylinder 188 rotates together with the driven gear 186. In addition, the rear end side of the rotating inner cylinder 188 is open. In addition, the rotating inner cylinder 188 is inserted into the opening portion 143a of the stationary outer cylinder 143 to be insertable and removable. That is, the open rear end side of the rotating inner cylinder 188 is disposed inside the stationary outer cylinder 143.

The lubricant flowing out from the gap between the through-hole 186a of the driven gear 186 and the screw shaft 181 flows into the rotating inner cylinder 188, flows into the stationary outer cylinder 143 from the rear end side of the rotating inner cylinder 188, and is discharged from the discharge path 143c.

According to this configuration, the lubricant flowing out from the gap between the through-hole 186a of the driven gear 186 and the screw shaft 181 is recovered by a double cylinder structure of the stationary outer cylinder 143 and the rotating inner cylinder 188. Accordingly, it is possible to prevent the lubricant from leaking outward. In addition, even when the toggle support 130 is advanced and retreated with respect to the tie bar 140 by rotating the screw nut 182, the rotating inner cylinder 188 is configured to be insertable into and removable from the opening portion 143a of the stationary outer cylinder 143. Therefore, mold space adjustment is not hindered.

In addition, the discharge path 143c may be drawn in the discharge direction. In this manner, the stationary outer cylinder 143 internally has a negative pressure, thereby generating the air flowing into the stationary outer cylinder 143 through the gap between the inner peripheral surface of the stationary outer cylinder 143 and the outer peripheral surface of the rotating inner cylinder 188. Accordingly, it is possible to prevent the lubricant from leaking outward from the gap.

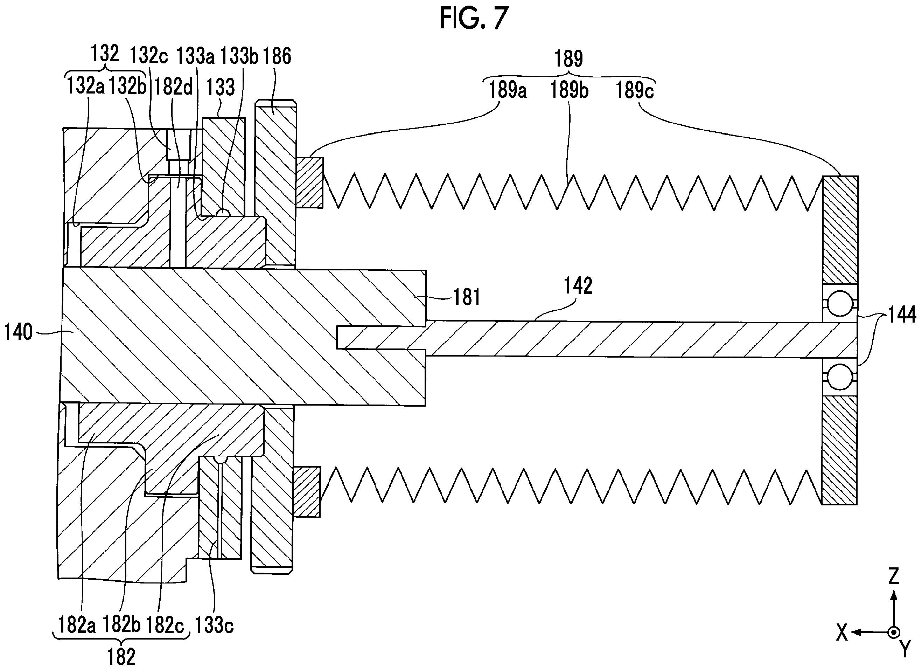

Next, a lubrication structure of the mold space adjustment mechanism 180 of a fourth embodiment will be described with reference to FIG. 7. FIG. 7 is a sectional view of the mold space adjustment mechanism 180 of the fourth embodiment.

In the lubrication structure of the mold space adjustment mechanism 180 of the fourth embodiment, compared to the lubrication structure of the mold space adjustment mechanism 180 of the first embodiment illustrated in FIG. 3, the extension shaft 142, a bearing 144, and a rotating body 189 are provided instead of the rotating cover 187 and the stationary cover 134.

The extension shaft 142 is fixed in the axial direction from an end of the tie bar 140 (screw shaft 181). The bearing 144 is provided in an end portion of the extension shaft 142.

The rotating body (accommodation portion) 189 has a member 189a, a stretchable bellows 189b, and a member 189c. The member 189a is an annular member, and is fixed to the driven gear 186. The member 189c is a plate-shaped member in which the bearing 144 is disposed in the center. The bellows 189b is provided between the member 189a and the member 189c, is stretchable, and is configured so that the lubricant does not leak. That is, the rotating body 189 rotates together with the driven gear 186.

According to this configuration, the lubricant flowing out from the gap between the through-hole 186a of the driven gear 186 and the screw shaft 181 is recovered by the rotating body 189. Accordingly, it is possible to prevent the lubricant from leaking outward. In addition, even when the toggle support 130 is advanced and retreated with respect to the tie bar 140 by rotating the screw nut 182, the bellows 189b is configured to be stretchable. Therefore, the mold space adjustment is not hindered. A configuration may be adopted so that the lubricant flowing into the rotating body 189 may be discharged from a discharge path (discharge portion) (not illustrated) provided in the member 189a or the member 189c. In addition, a configuration may be adopted so that the lubricant is discharged from the discharge path 133c.

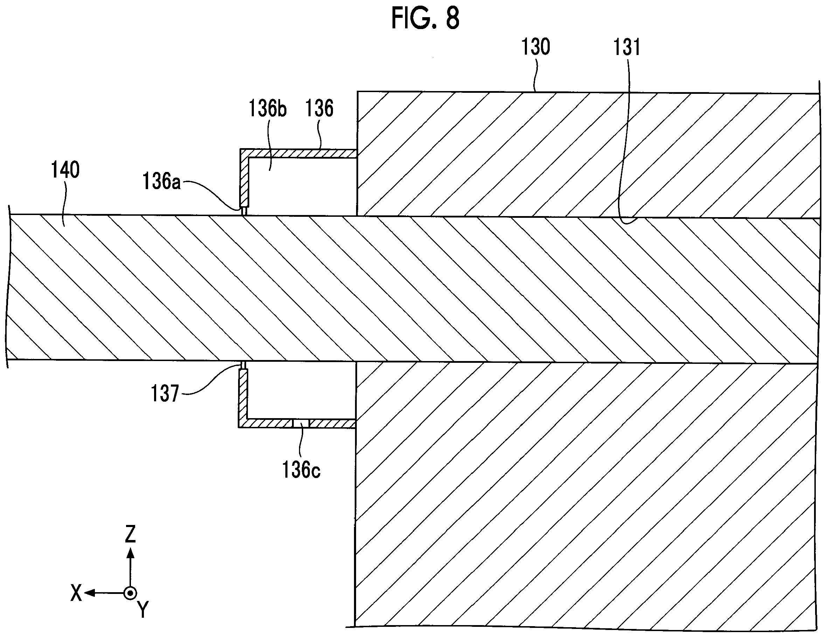

In addition, in the lubrication structure of the mold space adjustment mechanism 180 of the first to fourth embodiments, the structure of the front side portion of the toggle support 130 through which the tie bar 140 penetrates is not limited to that illustrated in FIG. 4. FIG. 8 is a sectional view of the front side portion of the toggle support 130 through which the tie bar 140 penetrates in a modification example.

In the lubrication structure of the mold space adjustment mechanism 180 of the modification example, compared to the lubrication structure of the mold space adjustment mechanism 180 of the first embodiment illustrated in FIG. 4, a stationary cover 136 is provided instead of the cylindrical groove 131b and the discharge path 131c.

The stationary cover 136 is provided on the front end side of the toggle support 130. The stationary cover 136 is fixed to the toggle support 130. In addition, the stationary cover 136 has a through-hole 136a through which the tie bar 140 penetrates. The stationary cover 136 has an internal space 136b. In addition, a discharge path 136c extending outward of the stationary cover 136 from the internal space 136b is formed. In FIG. 8, the discharge path 136c extends downward from the internal space 136b.

According to this configuration, the lubricant flowing out from the gap between the through-hole 131 of the toggle support 130 and the tie bar 140 is recovered by the stationary cover 136. Accordingly, it is possible to prevent the lubricant from leaking outward.

In addition, the through-hole 136a of the stationary cover 136 may be provided with a wiper 137 for wiping the lubricant adhering to the surface of the tie bar 140. In this manner, it is possible to further prevent the lubricant from leaking outward.

Hitherto, the embodiments of the injection molding machine 10 have been described. However, the present invention is not limited to the above-described embodiments. Various modifications and improvements can be made within the scope of the concept of the present invention described in the appended claims.

An example has been described in which the mold space adjustment mechanism 180 for adjusting the interval between the stationary platen 110 and the toggle support 130 is provided on the toggle support 130 side. However, without being limited thereto, the mold space adjustment mechanism 180 may be provided on the stationary platen 110 side.

In addition, the injection molding machine 10 may have a recovery portion (not illustrated) that recovers the lubricant discharged from the discharge portion (discharge paths 131c, 133c, 134c, 135c, 136c, 140c, and 143c). In this manner, the lubricant is recovered so that the lubricant can be prevented from leaking outward. In addition, the injection molding machine 10 may supply the lubricant recovered by the recovery portion to the screw nut 182 again from the supply path 132c. In this manner, the lubricant can be circulated and supplied to the screw nut 182.

### Brief Description of the Reference Symbols

- 10:: injection molding machine
- 100:: mold clamping unit
- 110:: stationary platen (second member)
- 120:: movable platen
- 130:: toggle support (first member)
- 131:: through-hole
- 131b:: cylindrical groove
- 131c:: discharge path
- 132:: screw nut accommodation portion (adjustment nut accommodation portion)
- 132a:: first accommodation portion
- 132b:: second accommodation portion
- 132c:: supply path
- 133:: pressing member
- 133a:: through-hole
- 133b:: cylindrical groove
- 133c:: discharge path
- 134:: stationary cover
- 134a:: through-hole
- 134b:: cylindrical groove
- 134c:: discharge path
- 135:: stationary cover
- 135a:: through-hole
- 135b:: enlarged diameter portion
- 135c:: discharge path
- 135d:: internal space
- 136:: stationary cover
- 136a:: through-hole
- 136b:: internal space
- 136c:: discharge path
- 137:: wiper
- 140:: tie bar (rod)
- 140c:: discharge path
- 142:: extension shaft
- 143:: stationary outer cylinder
- 144:: bearing
- 180:: mold space adjustment mechanism
- 181:: screw shaft (screw portion)
- 182:: screw nut (adjustment nut)
- 182a:: first cylinder portion
- 182b:: second cylinder portion
- 182c:: third cylinder portion
- 182d:: supply path
- 183:: mold space adjustment motor
- 184:: mold space adjustment motor encoder
- 185:: rotational driving force transmitting unit
- 186:: driven gear
- 186a:: through-hole
- 187:: rotating cover
- 187a:: through-hole
- 187b:: enlarged diameter portion
- 187c:: discharge path
- 187d:: internal space
- 188:: rotating inner cylinder
- 189:: rotating body
- 189a:: member
- 189b:: bellows
- 189c:: member
- L:: interval

## Claims

1. An injection molding machine (10) comprising:
a rod (140) that connects a first member (130) and a second member (110) to each other at an interval;
an adjustment nut (182) that is screwed to a screw portion (181) of the rod (140) to adjust the interval;
an adjustment nut accommodation portion (132) provided in the first member (130);
an accommodation portion (131b) configured to accommodate a lubricant which has lubricated a portion between an inner peripheral surface of the adjustment nut accommodation portion (132) and an outer peripheral surface of the adjustment nut (182); and
a discharge portion (131c, 140c) configured to discharge the lubricant accommodated in the accommodation portion (131b), wherein
the accommodation portion (131b) is formed on an inner peripheral surface of the first member (130).

2. The injection molding machine (10) according to claim 1,
wherein a plurality of the discharge portions (131c, 133c, 134c, 135c, 136c, 140c, 143c) are provided.

3. The injection molding machine (10) according to claim 1 or 2,
wherein the discharge portion (131c, 133c, 134c, 135c, 136c, 140c, 143c) is provided on an outer peripheral side of the adjustment nut (182).

4. The injection molding machine (10) according to claim 3, further comprising:
a pressing member (133) configured to retain the adjustment nut (182) accommodated in the adjustment nut accommodation portion (132),
wherein the discharge portion (131c, 133c, 134c, 135c, 136c, 140c, 143c) is provided in the pressing member (133).

5. The injection molding machine (10) according to claim 4,
wherein the accommodation portion (132) is a cylindrical groove (133b) provided on an inner peripheral surface of the pressing member (133), and
the discharge portion (131c, 133c, 134c, 135c, 136c, 140c, 143c) communicates with the cylindrical groove (133b).

6. The injection molding machine (10) according to any one of claims 1 to 5, further comprising:
a rotating cover (187) configured to rotate together with the adjustment nut (182), and that has the accommodation portion (132) and a first discharge portion (187c); and
a stationary cover (134) that is fixed to the first member (130), is provided outside the rotating cover (187), and has a second discharge portion (134b, 134c),
wherein a lubricant configured to lubricate the adjustment nut (182) and the screw portion (181) is discharged from the accommodation portion (132a, 132b) through the first discharge portion (187c) and the second discharge portion (134b, 134c).

7. The injection molding machine (10) according to claim 6,
wherein the second discharge portion (134b, 134c) has
a cylindrical groove (133b) provided on an inner peripheral surface of the stationary cover (187), and
a discharge path (187c) communicating with the cylindrical groove (133b).

8. The injection molding machine (10) according to any one of claims 1 to 5, further comprising:
a stationary outer cylinder (143) that is fixed to the rod (140), and has the accommodation portion (132a, 132b) and the discharge portion (131c, 133c, 134c, 135c, 136c, 140c, 143c); and
an inner cylinder (188) that is inserted into an opening portion (143a) of the stationary outer cylinder (143), and rotates together with the adjustment nut (182).

9. The injection molding machine (10) according to any one of claims 1 to 8, further comprising:
a recovery portion configured to recover the lubricant discharged from the discharge portion (131c, 133c, 134c, 135c, 136c, 140c, 143c).

10. The injection molding machine (10) according to claim 9,
wherein the lubricant recovered by the recovery portion is supplied to the adjustment nut (182).

11. An injection molding machine (10) comprising:
a rod (140) that connects a first member (130) and a second member (110) to each other at an interval;
an adjustment nut (182) that is screwed to a screw portion (181) of the rod (140) to adjust the interval;
an adjustment nut accommodation portion (132) provided in the first member (130);
a pressing member (133) configured to retain the adjustment nut (182) accommodated in the adjustment nut accommodation portion (132);
an accommodation portion (133b) formed on an inner peripheral surface of the pressing member (133) and configured to accommodate a lubricant which has lubricated a portion between the inner peripheral surface of the pressing member (133) and an outer peripheral surface of the adjustment nut (182); and
a discharge portion (133c) configured to discharge the lubricant accommodated in the accommodation portion (133b).

12. An injection molding machine (10) comprising:
a rod (140) that connects a first member (130) and a second member (110) to each other at an interval;
an adjustment nut (182) that is screwed to a screw portion (181) of the rod (140) to adjust the interval;
a driven gear (186) fixed to the adjustment nut (182);
a supply path (132c) configured to communicate with the adjustment nut (182) and supply a lubricant to the adjustment nut (182); and
a discharge portion (187c) configured to discharge the lubricant which is supplied from the supply path (132c), has lubricated a portion between the rod (140) and the adjustment nut (182), and has flowed between an inner peripheral surface of the driven gear (186) and the rod (140).

## Patentansprüche

1. Spritzgießmaschine (10), umfassend:
eine Stange (140), die ein erstes Element (130) und ein zweites Element (110) in einem Abstand miteinander verbindet;
eine Einstellmutter (182), die auf einen Schraubenabschnitt (181) der Stange (140) geschraubt ist, um den Abstand einzustellen;
einen Einstellmutter-Aufnahmeabschnitt (132), der in dem ersten Element (130) vorgesehen ist;
einen Aufnahmeabschnitt (131b), der konfiguriert ist, ein Schmiermittel aufzunehmen, das einen Abschnitt zwischen einer Innenumfangsfläche des Einstellmutter-Aufnahmeabschnitts (132) und einer Außenumfangsfläche der Einstellmutter (182) geschmiert hat; und
einen Auslassabschnitt (131c, 140c), der konfiguriert ist, das in dem Aufnahmeabschnitt (131b) aufgenommene Schmiermittel auszulassen,
wobei der Aufnahmeabschnitt (131b) an einer Innenumfangsfläche des ersten Elements (130) gebildet ist.

2. Spritzgießmaschine (10) nach Anspruch 1,
wobei mehrere Auslassabschnitte (131c, 133c, 134c, 135c, 136c, 140c, 143c) vorgesehen sind.

3. Spritzgießmaschine (10) nach Anspruch 1 oder 2,
wobei der Auslassabschnitt (131c, 133c, 134c, 135c, 136c, 140c, 143c) an einer Außenumfangsseite der Einstellmutter (182) vorgesehen ist.

4. Spritzgießmaschine (10) nach Anspruch 3, ferner umfassend:
ein Druckelement (133), das konfiguriert ist, die in dem Einstellmutter-Aufnahmeabschnitt (132) aufgenommene Einstellmutter (182) zu sichern,
wobei der Auslassabschnitt (131c, 133c, 134c, 135c, 136c, 140c, 143c) in dem Druckelement (133) vorgesehen ist.

5. Spritzgießmaschine (10) nach Anspruch 4,
wobei der Aufnahmeabschnitt (132) eine zylindrische Nut (133b) ist, die an einer Innenumfangsfläche des Druckelements (133) vorgesehen ist, und
der Auslassabschnitt (131c, 133c, 134c, 135c, 136c, 140c, 143c) mit der zylindrischen Nut (133b) in Verbindung steht.

6. Spritzgießmaschine (10) nach einem der Ansprüche 1 bis 5, ferner umfassend:
eine drehbare Abdeckung (187), die konfiguriert ist, sich zusammen mit der Einstellmutter (182) zu drehen, und die den Aufnahmeabschnitt (132) und einen ersten Auslassabschnitt (187c) aufweist; und
eine stationäre Abdeckung (134), die an dem ersten Element (130) fixiert ist, außerhalb der drehbaren Abdeckung (187) vorgesehen ist und einen zweiten Auslassabschnitt (134b, 134c) aufweist,
wobei ein Schmiermittel, das konfiguriert ist, die Einstellmutter (182) und den Schraubenabschnitt (181) zu schmieren, aus dem Aufnahmeabschnitt (132a, 132b) durch den ersten Auslassabschnitt (187c) und den zweiten Auslassabschnitt (134b, 134c) ausgelassen wird.

7. Spritzgießmaschine (10) nach Anspruch 6,
wobei der zweite Auslassabschnitt (134b, 134c) aufweist
eine zylindrische Nut (133b), die an einer Innenumfangsfläche der stationären Abdeckung (187) vorgesehen ist, und
einen Auslassweg (187c), der mit der zylindrischen Nut (133b) in Verbindung steht.

8. Spritzgießmaschine (10) nach einem der Ansprüche 1 bis 5, ferner umfassend:
einen stationären Außenzylinder (143), der an der Stange (140) fixiert ist und den Aufnahmeabschnitt (132a, 132b) und den Auslassabschnitt (131c, 133c, 134c, 135c, 136c, 140c, 143c) aufweist; und
einen Innenzylinder (188), der in einen Öffnungsabschnitt (143a) des stationären Außenzylinders (143) eingesetzt ist und sich zusammen mit der Einstellmutter (182) dreht.

9. Spritzgießmaschine (10) nach einem der Ansprüche 1 bis 8, ferner umfassend:
einen Rückgewinnungsabschnitt, der konfiguriert ist, das aus dem Auslassabschnitt (131c, 133c, 134c, 135c, 136c, 140c, 143c) ausgelassene Schmiermittel zurückgewinnen.

10. Spritzgießmaschine (10) nach Anspruch 9,
wobei das durch den Rückgewinnungsabschnitt zurückgewonnene Schmiermittel der Einstellmutter (182) zugeführt wird.

11. Spritzgießmaschine (10), umfassend:
eine Stange (140), die ein erstes Element (130) und ein zweites Element (110) in einem Abstand miteinander verbindet;
eine Einstellmutter (182), die auf einen Schraubenabschnitt (181) der Stange (140) geschraubt ist, um den Abstand einzustellen;
einen Einstellmutter-Aufnahmeabschnitt (132), der in dem ersten Element (130) vorgesehen ist;
ein Druckelement (133), das konfiguriert ist, die in dem Einstellmutter-Aufnahmeabschnitt (132) aufgenommene Einstellmutter (182) zu sichern;
einen Aufnahmeabschnitt (133b), der an einer Innenumfangsfläche des Druckelements (133) gebildet und konfiguriert ist, ein Schmiermittel aufzunehmen, das einen Abschnitt zwischen der Innenumfangsfläche des Druckelements (133) und einer Außenumfangsfläche der Einstellmutter (182) geschmiert hat; und
einen Auslassabschnitt (133c), der konfiguriert ist, das in dem Aufnahmeabschnitt (133b) aufgenommene Schmiermittel auszulassen.

12. Spritzgießmaschine (10), umfassend:
eine Stange (140), die ein erstes Element (130) und ein zweites Element (110) in einem Abstand miteinander verbindet;
eine Einstellmutter (182), die auf einen Schraubenabschnitt (181) der Stange (140) geschraubt ist, um den Abstand einzustellen;
ein angetriebenes Zahnrad (186), das an der Einstellmutter (182) fixiert ist;
einen Zufuhrweg (132c), der konfiguriert ist, mit der Einstellmutter (182) in Verbindung zu sein und der Einstellmutter (182) ein Schmiermittel zuzuführen; und
einen Auslassabschnitt (187c), der konfiguriert ist, das Schmiermittel auszulassen, das aus dem Zufuhrweg (132c) zugeführt wird, einen Abschnitt zwischen der Stange (140) und der Einstellmutter (182) geschmiert hat und zwischen einer Innenumfangsfläche des angetriebenen Zahnrads (186) und der Stange (140) geströmt ist.

## Revendications

1. Une machine de moulage à injection (10) comprenant :
une tige (140) qui relie un premier élément (130) et un second élément (110) l'un à l'autre selon un intervalle ;
un écrou de réglage (182) qui est vissé à une partie vis (181) de la tige (140) pour régler l'intervalle ;
une partie de logement d'écrou de réglage (132) prévue dans le premier élément (130) ;
une partie de logement (131b) configurée pour loger un lubrifiant qui a lubrifié une partie entre une surface périphérique interne de la partie de logement d'écrou de réglage (132) et une surface périphérique externe de l'écrou de réglage (182) ; et
une partie de décharge (131c, 140c) configurée pour décharger le lubrifiant logé dans la partie de logement (131b),
dans laquelle la partie de logement (131b) est formée sur une surface périphérique interne du premier élément (130).

2. La machine de moulage à injection (10) selon la revendication 1,
dans laquelle une pluralité des parties de décharge (131c, 133c, 134c, 135c, 136c, 140c, 143c) sont prévues.

3. La machine de moulage à injection (10) selon la revendication 1 ou 2,
dans laquelle la partie de décharge (131c, 133c, 134c, 135c, 136c, 140c, 143c) est prévue sur un côté périphérique externe de l'écrou de réglage (182).

4. La machine de moulage à injection (10) selon la revendication 3, comprenant en outre :
un élément de pression (133) configuré pour retenir l'écrou de réglage (182) logé dans la partie de logement d'écrou de réglage (132),
dans laquelle la partie de décharge (131c, 133c, 134c, 135c, 136c, 140c, 143c) est prévue dans l'élément de pression (133).

5. La machine de moulage à injection (10) selon la revendication 4,
dans laquelle la partie de logement (132) est une rainure cylindrique (133b) prévue sur une surface périphérique interne de l'élément de pression (133), et
la partie de décharge (131c, 133c, 134c, 135c, 136c, 140c, 143c) communique avec la rainure cylindrique (133b).

6. La machine de moulage à injection (10) selon l'une quelconque des revendications 1 à 5, comprenant en outre :
un couvercle rotatif (187) configuré pour tourner en conjugaison avec l'écrou de réglage (182), et qui possède la partie de logement (132) et une première partie de décharge (187c) ; et
un couvercle stationnaire (134) qui est fixé au premier élément (130), est prévu à l'extérieur du couvercle rotatif (187) et possède une seconde partie de décharge (134b, 134c),
dans laquelle un lubrifiant configuré pour lubrifier l'écrou de réglage (182) et la partie de vissage (181) est déchargé de la partie de logement (132a, 132b) à travers la première partie de décharge (187c) et la seconde partie de décharge (134b, 134c).

7. La machine de moulage à injection (10) selon la revendication 6,
dans laquelle la seconde partie de décharge (134b, 134c) possède
une rainure cylindrique (133b) prévue sur une surface périphérique interne du couvercle stationnaire (187), et
un trajet de décharge (187c) communiquant avec la rainure cylindrique (133b).

8. La machine de moulage à injection (10) selon l'une quelconque des revendications 1 à 5, comprenant en outre :
un cylindre externe stationnaire (143) qui est fixé à la tige (140), et possède la partie de logement (132a, 132b) et la partie de décharge (131c, 133c, 134c, 135c, 136c, 140c, 143c) ; et
un cylindre interne (188) qui est inséré dans une partie d'ouverture (143a) du cylindre externe stationnaire (143), et tourne en conjugaison avec l'écrou de réglage (182).

9. La machine de moulage à injection (10) selon l'une quelconque des revendications 1 à 8, comprenant en outre :
une partie de récupération configurée pour récupérer le lubrifiant déchargé de la partie de décharge (131c, 133c, 134c, 135c, 136c, 140c, 143c).

10. La machine de moulage à injection (10) selon la revendication 9,
dans laquelle le lubrifiant récupéré par la partie de récupération est fourni à l'écrou de réglage (182).

11. Un machine de moulage à injection (10) comprenant :
une tige (140) qui relie un premier élément (130) et un second élément (110) l'un à l'autre selon un intervalle ;
un écrou de réglage (182) qui est vissé à une partie vis (181) de la tige (140) pour régler l'intervalle ;
une partie de logement d'écrou de réglage (132) prévue dans le premier élément (130) ;
un élément de pression (133) configuré pour retenir l'écrou de réglage (182) logé dans la partie de logement d'écrou de réglage (132) ;
une partie de logement (133b) formée sur une surface périphérique interne de l'élément de pression (133) et configurée pour loger un lubrifiant qui a lubrifié une partie entre la surface périphérique interne de l'élément de pression (133) et une surface périphérique externe de l'écrou de réglage (182) ; et
une partie de décharge (133c) configurée pour décharger le lubrifiant logé dans la partie de logement (133b).

12. Un machine de moulage à injection (10) comprenant :
une tige (140) qui relie un premier élément (130) et un second élément (110) l'un à l'autre selon un intervalle ;
un écrou de réglage (182) qui est vissé à une partie vis (181) de la tige (140) pour régler l'intervalle ;
une roue menée (186) fixée à l'écrou de réglage (182) ;
un trajet d'alimentation (132c) configuré pour communiquer avec l'écrou de réglage (182) et fournir un lubrifiant à l'écrou de réglage (182) ; et
une partie de décharge (187c) configurée pour décharger le lubrifiant qui est fourni à partir du trajet d'alimentation (132c), a lubrifié une partie entre la tige (140) et l'écrou de réglage (182), et s'est écoulé entre une surface périphérique interne de la roue menée (186) et la tige (140).
